# EUROPÄISCHE PATENTSCHRIFT

(11) **EP 2 643 181 B1**
(45) Veröffentlichungstag und Bekanntmachung des Hinweises auf die Patenterteilung: **09.01.2019**
(21) Anmeldenummer: 11790942.4
(22) Anmeldetag: 25.11.2011
(51) Int. Cl.: B60K 11/04, B62D 21/15, B62D 25/08

(54) **FRONTENDMODUL-ANORDNUNG FÜR EINE KAROSSERIE EINES PERSONENKRAFTWAGENS**
FRONT END MODULE FOR A MOTOR VEHICLE
MODULE AVANT POUR VÉHICULE AUTOMOBILE

(30) Priorität: 26.11.2010 DE 102010052510
(43) Veröffentlichungstag der Anmeldung: 02.10.2013
(73) Patentinhaber: Flex-N-Gate Germany GmbH, 86633 Neuburg (DE)
(72) Erfinder: METZNER, Thomas, 70546 Stuttgart (DE); LEUDTS, Thorsten, 49090 Osnabrück (DE)
(74) Vertreter: Lavoix
(86) Internationale Anmeldenummer: PCT/EP2011/071056
(87) Internationale Veröffentlichungsnummer: WO 2012/069645

(56) Entgegenhaltungen:
- EP-A1- 1 035 351
- EP-A2- 1 197 398
- EP-A2- 1 902 928
- DE-U1-202009 006 264
- US-A- 3 848 886

## Beschreibung

Die Erfindung betrifft eine Frontendmodul-Anordnung für eine Karosserie eines Personenkraftwagens gemäß Oberbegriff des Anspruchs 1. Überdies betrifft die Erfindung eine Karosserie eines Personenkraftwagens mit einer solchen Frontendmodul-Anordnung sowie ein Energieabsorptionselement für eine solche Frontendmodul-Anordnung gemäß Oberbegriff des Anspruchs 8.

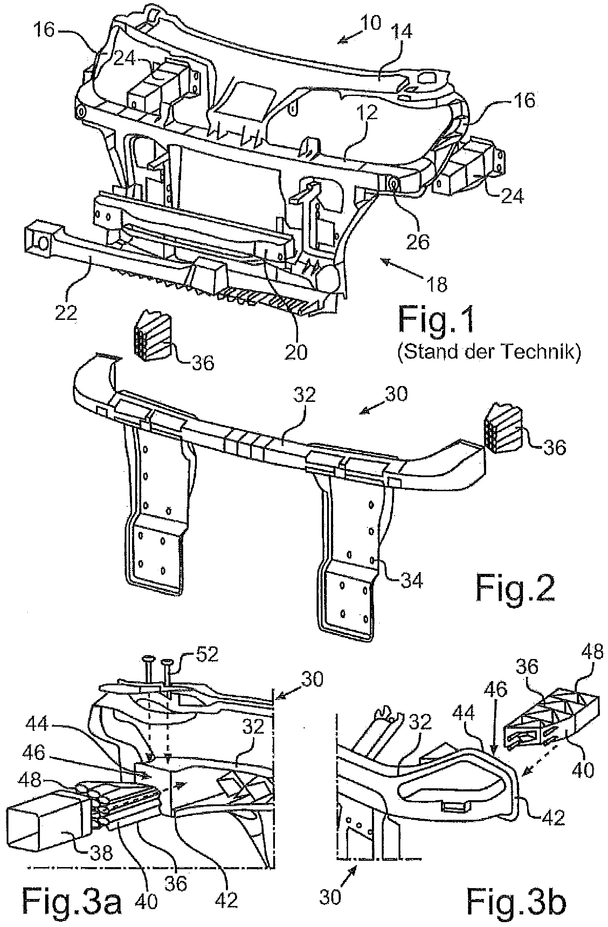

Eine solche Frontendmodul-Anordnung ist beispielsweise bereits in zumindest einem Fahrzeug im Einsatz und in Fig. 1 in einer perspektivischen Explosionsdarstellung gezeigt. Dabei umfasst die dortige Frontendmodul-Anordnung einen Frontendmodul-Träger 10, der ein Trägerelement 12 in Form eines Obergurts aufweist. Dieses Trägerelement 12 bildet mit einem oberen Trägerelement 14 sowie zwei Seitenteilen 16 einen etwa rechteckförmigen, umlaufend geschlossenen Rahmen. Nach unten hin schließt sich an das Trägerelement 12 eine Struktur18 des Frontendmodul-Trägers 10 an, an welcher ein Querträger 20 mit einem Schaumteil 22 zum Fußgängerschutz abgestützt ist.

Weiterhin erkennbar sind zwei Energieabsorptionselemente 24 in Form von so genannten Crashboxen, über welche das Trägerelement 12 in Form des Obergurts nach hinten hin jeweils seitlich abgestützt ist. Diese beiden Energieabsorptionselemente 24 sind nach hinten hin an nicht erkennbaren zugehörten Trägerelementen in Form von Längsträgern der Karosserie des Personenkraftwagens abgestützt. Die Befestigung des Trägerelements 12 an den jeweiligen Energieabsorptionselementen 24 erfolgt über jeweilige Schraubverbindungen, welche das Trägerelement 12 im Bereich einer jeweiligen Durchgangsöffnung 26 durchsetzen und mit dem jeweiligen Energieabsorptionselement 24 verbunden sind. Dabei erstrecken sich die jeweiligen Schraubverbindungen in Fahrzeuglängsrichtung beziehungsweise horizontal.

DE 20 2009 006 264 U1 beschreibt einen Querträger aus Faserverbundkunststoff mit in einer Kunststoffmatrix eingebetteten Endlos- und/oder Wirrfasern für ein Fahrzeugkörper-Ende mit einer zumindest einen einseitig offenen Hohlraum aufweisenden Crashbox-Struktur, die im Querträger einstückig an jedem Ende eines Verbindungsprofils vorgesehen ist, und mehreren, in jeder Crashbox-Struktur vorgesehenen Längsträger-Anschlüssen zum beidendigen Befestigen des Querträgers an Längsträgern des Fahrzeugkörpers, wobei jede Crashbox-Struktur mindestens drei in Verlaufsrichtung des Verbindungsprofils zumindest im Wesentlichen direkt nebeneinander liegende, funktionell parallel geschaltete Crashboxen mit jeweils mindestens einem Hohlraum aufweist, und wobei die Anschlüsse innerhalb von Hohlräumen in zu einer Befestigungsseite des Querträgers weisenden Hohlraumböden angeordnet und von allen Seiten von Endlos- und/oder Wirrfasern des Faserverbundkunststoffes umschlossen sind.

Aufgabe der vorliegenden Erfindung ist es, eine Frontendmodul-Anordnung für eine Karosserie eines Personenkraftwagens, eine Karosserie für einen Personenkraftwagen selbst sowie ein Energieabsorptionselement für eine solche Frontendmodul-Anordnung der eingangs genannten Art zu schaffen, mittels welchen eine Knautschzone geschaffen werden kann, welche besonders gewichtsgünstig ist, ein hohes Energieabsorptionsvermögen aufweist und dal darüber hinaus eine besonders günstige Steifigkeit hat.

Diese Aufgabe wird erfindungsgemäß durch eine Frontendmodul-Anordnung und eine Karosserie mit den Merkmalen der Ansprüche 1 und 6 gelöst. Vorteilhafte Ausgestaltungen mit zweckmäßigen und nichttrivialen Weiterbildungen der Erfindung sind in den jeweils abhängigen Ansprüchen angegeben.

Um eine Frontend-Modulanordnung der eingangs genannten Art zu schaffen, mittels welcher sich eine verbesserte Knautschzone für die Karosserie des Personenkraftwagens realisieren lässt, ist es gemäß Anspruch 1 unter Anderem vorgesehen, dass die Energieabsorptionselemente zumindest über einen Längenbereich in einer jeweils korrespondierenden Aufnahme des Trägerelements des Frontendmoduls-Trägers integriert angeordnet sind. Die Aufnahmen des Trägerelements sind hierbei bevorzugterweise etwa schachtförmig, also beispielsweise als umlaufend geschlossener Schacht, ausgebildet, so dass die jeweiligen Energieabsorptionselemente beispielsweise zumindest über einen überwiegenden Längenbereich innerhalb des korrespondierenden Trägerelements des Frontendmodul-Trägers integriert angeordnet sind. Hierdurch ergibt sich insbesondere der Vorteil, dass sich der Bauraumbedarf für die Energieabsorptionselemente in Fahrzeuglängsrichtung erheblich reduzieren lässt. Durch die Überdeckung des entsprechenden Trägerelements des Frontendmodul-Trägers und der jeweiligen Energieabsorptionselemente lässt sich zudem eine entsprechende Energieabsorption in einer Frühphase einer unfallbedingten Kraftbeaufschlagung erreichen, wodurch mittels der erfindungsgemäßen Frontendmodul-Anordnung ein hohes Maß an Aufprallenergie aufgenommen werden kann. Zudem werden definierte Lasten abgebaut, ohne dass die dahinterliegende Struktur beschädigt wird.

In weiterer Ausgestaltung der Erfindung sind die Energieabsorptionselemente über ihre gesamte Länge in der jeweils korrespondierenden Aufnahme des Trägerelements des Frontendmodul-Trägers integriert angeordnet. Eine derartige vollständige Integration ermöglicht nicht nur ein besonders frühzeitiges Ansprechen der Knautschzone und ein hohes Energieabsorptionsvermögen, sondern darüber hinaus kann durch diese vollständige Integration des jeweiligen Energieabsorptionselements das korrespondierende Trägerelement auf besonders einfache Weise direkt mit jeweiligen Längsträgern der Karosserie verbunden werden, welche an die jeweiligen Energieabsorptionselemente angrenzen. Somit ergibt sich eine besonders steife Verbindung zwischen dem Trägerelement des Frontendmodul-Trägers und dem jeweiligen Längsträger der Karosserie des Personenkraftwagens. Darüber hinaus ist durch den jeweiligen Längsträger der Karosserie des Personenkraftwagens eine besonders günstige Abstützung des korrespondierenden Energieabsorptionselements, welches vollständig in das Trägerelement des Frontendmodul-Trägers hineinragt, gegeben.

Die vorstehend im Zusammenhang mit der erfindungsgemäßen Frontendmodul Anordnung beschriebenen Vorteile gelten in ebensolcher Weise für die Karosserie gemäß Patentanspruch 6. Darüber hinaus lässt sich eine besonders steife Befestigung der Frontendmodul-Anordnung an der Karosserie des Personenkraftwagens schaffen, wenn das Trägerelement, insbesondere der Obergurt, an jeweiligen hinteren Enden mit korrespondierenden A-Säulen verbunden ist. Insbesondere hinsichtlich der Verwindungssteifigkeit lässt sich hierdurch eine besonders vorteilhafte Struktur erreichen.

Gemäß einer vorteilhaften Ausgestaltung der Erfindung ist jedes der Energieabsorptionselemente aus einem Kunststoff gebildet. Eine derartige Ausgestaltung ist nicht nur besonders gewichtsgünstig, sondern auch besonders leicht herstellbar. Zudem kann der Kunststoff in einfacher Weise in seiner Form so gestaltet werden, um ein gezieltes Deformations- und Energieaufnahmevermögen zu schaffen.

Weitere Vorteile, Merkmale und Einzelheiten der Erfindung ergeben sich aus der nachfolgenden Beschreibung eines bevorzugten Ausführungsbeispiels sowie anhand der Zeichnungen; diese zeigen in:
- Fig. 1: eine perspektivische Explosionsdarstellung auf eine Frontendmodul-Anordnung gemäß dem Stand der Technik;
- Fig. 2: eine perspektivische Explosionsdarstellung einer Frontendmodul-Anordnung für eine Karosserie eines Personenkraftwagens gemäß der Erfindung mit einem Frontendmodul-Träger mit einem im Wesentlichen U-förmigen Trägerelement in Form eines Obergurts, welcher unter Vermittlung jeweiliger Energieabsorptionselemente an jeweils zugeordneten Trägerelementen in Form von Längsträgern der Karosserie des Personenkraftwagens abstützbar ist, wobei die Energieabsorptionselemente im Wesentlichen vollständig in den jeweils korrespondierenden, als umlaufend geschlossene Schächte ausgebildeten Aufnahmen des Trägerelements des Frontendmodul-Trägers integriert anordenbar sind;
- Fig, 3a, 3b: eine perspektivische Explosionsdarstellung von schräg hinten sowie eine perspektivische Explosionsdarstellung von schräg vorne auf das ausschnittsweise erkennbare Trägerelement in Form des Obergurts des Frontendmodul-Trägers, in dessen umlaufend geschlossenen endseitigen Schacht das jeweils korrespondierende Energieabsorptionselement zumindest im Wesentlichen vollständig einsteckbar ist, wobei in das Trägerelement mit dem in Fig. 3a erkennbaren korrespondierenden Längsträger der Karosserie des Personenkraftwagens unter Vermittlung entsprechender Schraubverbindungen, welche sich im Wesentlichen Fahrzeughochrichtung erstrecken, unmittelbar verbindbar ist;

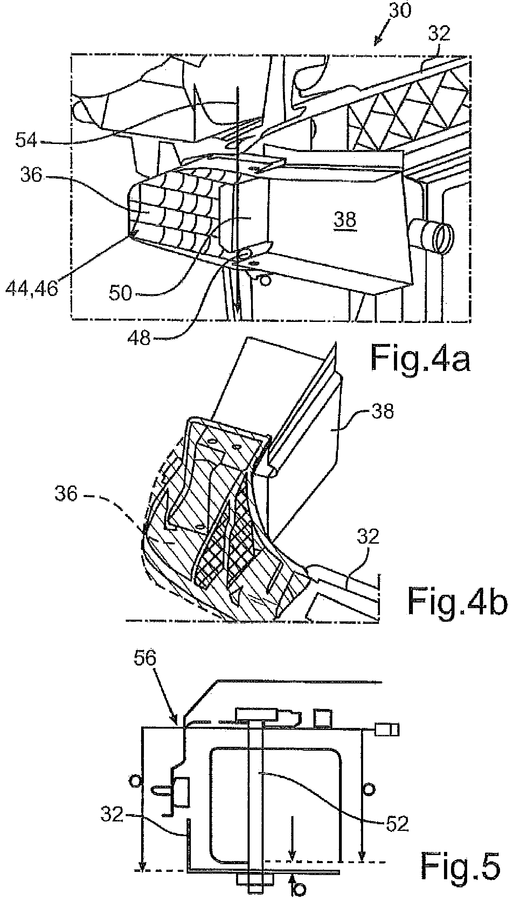

- Fig. 4a, 4b: eine auschnittsweise Schnittansicht auf die Frontendmodul-Anordnung entlang einer in Fahrzeughochrichtung bzw. in Fahrzeuglängsrichtung verlaufenden Schnittebene, wobei insbesondere die Integration des korrespondierenden Energieabsorptionselements in die entsprechende schachtförmige Aufnahme des Trägerelements sowie die unmittelbare Anordnung und Befestigung des Trägerelements an dem korrespondierenden, dahinterliegenden Längsträger der Karosserie des Personenkraftwagens erkennbar ist; und in
- Fig. 5: eine ausschnittsweise Schnittansicht auf die Anbindung des Trägerelements bzw. des Obergurts des Frontenmodul-Trägers im Bereich seines hinteren Endes an einer korrespondierenden A-Säule der Karosserie des Personenkraftwagens.

Während in Fig. 1 in einer perspektivischen Explosionsdarstellung die bereits eingangs erläuterte Frontendmodul-Anordnung gemäß dem Stand der Technik erkennbar ist, zeigen die Fig. 2 bis 5 eine erfindungsgemäße Frontendmodul-Anordnung für eine Karosserie eines vorliegend in Einvolumenform mit lediglich einer Fahrzeugsitzreihe ausgebildeten Kraftwagens. Demzufolge soll im vorliegenden Fall eine Knautschzone für den Personenkraftwagen erreicht werden, welche eine relativ geringe Baulänge in Fahrzeuglängsrichtung hat, aber dennoch über ein besonders gutes Energieabsorptionsvermögen im Falle einer unfallbedingten Frontalkollision verfügt.

Hierzu ist in Fig. 2 in einer perspektivischen Explosionsdarstellung eine Frontenmodul-Anordnung erkennbar, welche zunächst einen Frontendmodul-Träger 30 umfasst. Dieser Frontendmodul-Träger 30 weist als wesentliches Bauteil ein Trägerelement 32 in Form eines Obergurts auf, dessen Gestalt im Weiteren noch näher erläutert wird. Dieses Trägerelement 32 ist vorliegend beispielsweise als Hybridbauteil mit einem oder mehreren Metallträgerteilen ausgebildet, welches nachfolgend beispielsweise mit einem Kunststoff umspritzt worden ist bzw. sind. Natürlich wären auch andere Ausgestaltungen dieses Trägerelements 32, beispielsweise vollständig aus einem entsprechend stabilen Kunststoff, denkbar.

Des Weiteren umfasst der Frontendmodul-Träger 30 zwei vom Trägerelement 32 nach unten hin abstehende Stützen 34, an welchen beispielsweise ein nicht näher erläuterter Querträger bzw. ein Schaumteil, welches insbesondere dem Fußgängerschutz dient, abgestützt sein können.

Des Weiteren erkennbar sind zwei Energieabsorptionselemente 36 in Form von so genannten Crashboxen, über welche das Träger-Element 32 an jeweils korrespondierenden Längsträgern 38 (Fig. 3a, 4a, 4b) auf im Weiteren noch näher beschriebene Weise abstützbar ist.

Eine Besonderheit der vorliegenden Frontendmodul-Anordnung ist dabei darin zu sehen, dass die beiden Energieabsorptionselemente 36 zumindest teilweise aus einem Kunststoff 40 gebildet sind. Bevorzugterweise bestehen die beiden Energieabsorptionselemente 36 vollständig aus Kunststoff. Dabei können die Energieabsorptionselemente 36 - wie aus einer Zusammenschau der Fig. 3a und 3b erkennbar ist - unterschiedliche Strukturen aufweisen.

Hierzu ist in Fig. 3a erkennbar, dass das dortige Energieabsorptionselement 36 im Wesentlichen eine Röhrenstruktur benachbarter Röhrenelemente aufweist, welche einstückig oder mehrstückig ausgebildet sein kann. Demgegenüber ist das Energieabsorptionselement 36, welches in Fig. 3b gezeigt ist, mit einer Rippenstruktur versehen.
Wie nun aus der Zusammenschau der Fig. 3a Und 3b erkennbar ist, weist das Trägerelement 32 an seinen jeweiligen Enden 42 jeweils eine korrespondierende Aufnahme 44 für das zugehörige Energieabsorptionselement 36 auf. Diese Aufnahmen 44 sind vorliegend als jeweils umlaufend geschlossene kastenförmige Schächte 46 ausgebildet. Die Querschnittsform dieser Schächte 46 bzw. Aufnahmen 44 kann dabei im Wesentlichen an die Trägerstruktur des Trägerelements 32 angepasst sein. So ist es beispielsweise insbesondere denkbar, dass das Trägerelement 32 durchgängig eine hohle Struktur bzw. ein Hohlprofil mit wechselndem oder gleich bleibendem Querschnitt aufweist.

Wie nun aus den Fig. 3a und 3b erkennbar ist, ist das jeweilige Energieabsorptionselement 36 zumindest über einen Längenbereich, vorliegend allerdings zumindest im Wesentlichen vollständig, innerhalb der korrespondierenden Aufnahme 44 bzw. innerhalb des entsprechenden Schachts 46 anzuordnen. Mit anderen Worten kann das jeweilige Energieabsorptionselement 36 soweit in das jeweilige Ende 42 des Trägerelements 32 eingeschoben werden, bis ein - in Einschubrichtung betrachtet - jeweiliges hinteres Ende 48 des Energieabsorptionselement 36 zumindest etwa in Überdeckung mit dem jeweiligen Ende 42 des Trägerelements 32 endet. Dabei ist das Trägerelement bevorzugterweise zumindest über einen Längenbereich an den Hohlquerschnitt des entsprechenden Schachts 46 der Aufnahme 44 des Trägerelements 32 angepasst.

Wie nun insbesondere in Zusammenschau der Fig. 3a und 4a erkennbar ist, ist durch die vollständige Integration des entsprechenden Energieabsorptionselements 36 in das korrespondierende Ende 42 des Trägerelements 32 die Möglichkeit gegeben, dass das Trägerelement 32 direkt mit dem jeweiligen Längsträger 38 der Karosserie des Personenkraftwagens verbunden werden kann, wobei - wie insbesondere aus Fig. 4a erkennbar ist - das jeweilige Energieabsorptionselement 36 mit seinem entsprechenden hinteren Ende 48 bevorzugterweise unmittelbar an den Längsträger 38 angrenzt bzw. sich an diesem rückwärtig abstützt. Hierzu weist das Längsträgerelement 38 - wie aus Fig. 4a erkennbar ist - einen entsprechenden Schenkel 50 auf. Bei einer unfallbedingten Kraftbeaufschlagung ist das Trägerelement 32 somit über die
Energieabsorptionselemente 36 an dem jeweils dahinterliegenden Längsträger 38 abstützbar.

Wie darüber hinaus insbesondere aus Fig. 3a sowie aus dem Pfeil 54 gemäß Fig. 4a erkennbar ist, ist das entsprechende Ende 42 des Trägerelernents 36 über jeweils zwei Schraubverbindungen 52, welche sich vertikal erstrecken, mit dem korrespondierenden vorderen Ende des entsprechenden Längsträgers 38 direkt verbunden. Die Befestigung des Trägerelements 32 an den Längsträgem 38 erfolgt also nicht unter Vermittlung der jeweiligen Energieabsorptionselemente 36, sondern vielmehr unmittelbar. Demzufolge erstrecken sich auch die jeweiligen hinteren Enden 42 des Trägerelements 32 zumindest bis zu den hinteren Enden der Energieabsorptionselemente 36. In Fig. 4b ist hierzu schließlich noch einmal die Anbindung eines solchen hinteren Endes 42 des Trägerelements 32 am korrespondierenden vorderen Ende des Längsträgers 38 erkennbar.

Die Energieabsorptionselemente 36, die vorliegend aus dem Kunststoff 40 bestehen, können in vorliegenden Ausführungsbeispielen in ihrer finalen Position am Trägerelement 30 über entsprechende Rastelemente festgelegt, beispielsweise eingeclipst, werden. Bei der Integration der Energieabsorptionselemente 36 in das Trägerelement 32 ist es klar, dass die Darstellbarkeit der benötigten Kraft-Weg-Verläufe über die obere Lastebene sichergestellt sein muss. Hierbei ist eine maximale Energieabsorption unter Beachtung des maximalen Kraftniveaus des Rohbaus bzw. der Karosserie unter Ausnutzung der zur Verfügung stehenden Deformationslänge besonders wünschenswert. Durch die Integration der Energieabsorptionselemente 36 lässt sich in ersichtlicher Weise der erforderliche Bauraum für diese erheblich reduzieren. Durch die Erfindung wird die Energie der unterschiedlichen Lastquellen, beispielsweise dem Crashreparaturtest, gezielt abgebaut.

In Fig. 5 ist schließlich erkennbar, in welcher Weise das Trägerelement 32 an seinen jeweiligen Enden 42 mit korrespondierenden A-Säulen 56 verbunden werden kann. Dabei sind den A-Säulen 56 die entsprechenden Längsträger 38 zugeordnet, so dass die wünschenswerte und dargestellte Verschraubung in Fahrzeughochrichtung (z-Richtung) erfolgen kann. Durch diese Anbindung des Frontendmoduls bzw. des Frontendmodul-Trägers 30 und des Trägerelement 32 lässt sich die Torsionssteifigkeit im Bereich der Knautschzone erheblich verbessern. Dies ist im vorliegenden Fall von besonderem Vorteil, da das Trägerelement 32 zur Torsionssteifigkeit des Rohbau- bzw. der Karosserie beitragen muss. Hierzu wird das Trägerelement 32 bzw. der Obergurt entsprechend über die korrespondierende A-Säule 56 geschoben und über die beiden Schraubverbindungen 52 jeweils in Fahrzeughochrichtung (z-Richtung) verschraubt. Das Toleranzkonzept ist dabei so auszulegen, dass eine Modulmontage mit einem Handlingsgerät möglich ist. Dabei ist es besonders vorteilhaft, wenn alle Anbindungspunkte für alle Varianten des Kraftwagens verwendet werden können. Die A-Säule 56 bietet dabei die Möglichkeit zur direkten Referenzierung.

## Patentansprüche

1. Frontendmodul-Anordnung für eine Karosserie eines Personenkraftwagens, mit
- einem Frontendmodul-Träger (30), welcher wenigstens ein Trägerelement (32), das ein Obergurt ist, umfasst, und
- jeweiligen Energieabsorptionselementen (36), über die der Frontendmodul-Träger (30) an jeweils zugeordneten Trägerelementen (38) der Karosserie des Personenkraftwagens abstützbar ist,
**dadurch gekennzeichnet, dass**
die Energieabsorptionselemente (36) zumindest über einen Längenbereich in einer jeweils korrespondierenden Aufnahme (44) des Trägerelements (32) des Frontendmodul-Trägers (30) integriert angeordnet sind, und dass die Energieabsorptionselemente (36) über ihre gesamte Länge in der jeweils korrespondierenden Aufnahme (44) des Trägerelements (32) des Frontendmodul-Trägers (30) integriert angeordnet sind.

2. Frontendmodul-Anordnung nach Anspruch 1,
**dadurch gekennzeichnet, dass**
die jeweilige Aufnahme (44) des Trägerelements (32) als umlaufend geschlossener Schacht (46) ausgebildet ist.

3. Frontendmodul-Anordnung nach einem der Ansprüche 1 oder 2,
**dadurch gekennzeichnet, dass**
das Trägerelement (32), insbesondere der Obergurt, des Frontendmodul-Trägers (30) direkt mit jeweiligen Längsträgern (38) der Karosserie verbunden ist, wobei die jeweiligen Energieabsorptionselemente (36) an die Längsträger (38) angrenzen.

4. Frontendmodul-Anordnung nach einem der vorhergehenden Ansprüche,
**dadurch gekennzeichnet, dass**
sich jeweilige hintere Enden (42) des Trägerelements (38), insbesondere des Obergurts, des Frontendmodul-Trägers (30) zumindest bis zu hinteren Enden (48) der Energieabsorptionselemente (36) erstrecken.

5. Frontendmodul-Anordnung nach einem der vorhergehenden Ansprüche, **dadurch gekennzeichnet, dass** jedes der Energieabsorptionselemente (36) aus einem Kunststoff (40) gebildet ist.

6. Karosserie eines Personenkraftwagens mit einer Frontendmodul-Anordnung nach einem der Ansprüche 1 bis 5.

7. Karosserie nach Anspruch 6,
**dadurch gekennzeichnet, dass**
das Trägerelement (32), insbesondere der Obergurt, an jeweiligen hinteren Enden (42) mit korrespondierenden A-Säulen (56) verbunden ist.

## Claims

1. A front end module arrangement for a body of a passenger vehicle, having
- a front end module support (30), which comprises at least one support element (32), which is an upper flange, and
- respective energy absorption elements (36), via which the front end module support (30) can be supported on respectively assigned support elements (38) of the body of the passenger vehicle,
**characterized in that**
the energy absorption elements (36) are arranged in an integrated manner at least over a length region in a respectively corresponding receptacle (44) of the support element (32) of the front end module support (30), and that the energy absorption elements (36) are arranged in an integrated manner over their entire length in the respectively corresponding receptacle (44) of the support element (32) of the front end module support (30).

2. A front end module arrangement according to Claim 1,
**characterized in that**
the respective receptacle (44) of the support element (32) is designed as a circumferentially closed shaft (46).

3. A front end module arrangement according to any one of Claims 1 or 2,
**characterized in that**
the support element (32), in particular the upper flange, of the front end module support (30) is connected directly to respective longitudinal supports (38) of the body, wherein the respective energy absorption elements (36) are adjacent to the longitudinal supports (38).

4. A front end module arrangement according to any one of the preceding claims,
**characterized in that**
respective rear ends (42) of the support element (38), in particular of the upper flange, of the front end module support (30) extend at least up to rear ends (48) of the energy absorption elements (36).

5. A front end module arrangement according to any of the preceding claims, **characterized in that** each of the energy absorption elements (36) is formed from a plastic (40).

6. A body of a passenger vehicle having a front end module arrangement according to any one of Claims 1 to 5.

7. A body according to Claim 6,
**characterized in that**
the support element (32), in particular the upper flange, on respective rear ends (42) is connected to corresponding A-columns (56).

## Revendications

1. Agencement de module d'extrémité avant pour une carrosserie d'une voiture de tourisme, avec
- une poutre de module d'extrémité avant (30) qui comprend au moins un élément de poutre (32) qui est une semelle supérieure, et
- des éléments d'absorption d'énergie (36) respectifs par le biais desquels la poutre de module d'extrémité avant (30) peut reposer sur des éléments de poutre (38) respectivement affectés de la carrosserie de la voiture de tourisme,
**caractérisé en ce que**
les éléments d'absorption d'énergie (36) sont disposés de façon intégrée, au moins sur une zone de longueur, dans un logement (44) respectivement correspondant de l'élément de poutre (32) de la poutre de module d'extrémité avant (30), et **en ce que** les éléments d'absorption d'énergie (36), sur toute leur longueur, sont disposés de façon intégrée dans le logement (44) respectivement correspondant de l'élément de poutre (32) de la poutre de module d'extrémité avant (30).

2. Agencement de module d'extrémité avant selon la revendication 1,
**caractérisé en ce que**
le logement (44) respectif de l'élément de poutre (32) est constitué en tant que puits (46) fermé périphériquement.

3. Agencement de module d'extrémité avant selon l'une des revendications 1 ou 2, **caractérisé en ce que**
l'élément de poutre (32), en particulier la semelle supérieure, de la poutre de module d'extrémité avant (30) est raccordé directement à des longerons (38) respectifs de la carrosserie, les éléments d'absorption d'énergie (36) respectifs étant contigus aux longerons (38).

4. Agencement de module d'extrémité avant selon l'une des revendications précédentes,
**caractérisé en ce que**
des extrémités (42) arrière respectives de l'élément de poutre (38), en particulier de la semelle supérieure, de la poutre de module d'extrémité avant (30) s'étendent au moins jusqu'aux extrémités (48) arrière des éléments d'absorption d'énergie (36).

5. Agencement de module d'extrémité avant selon l'une des revendications précédentes,
**caractérisé en ce que** chacun des éléments d'absorption d'énergie (36) est formé d'une matière plastique (40).

6. Carrosserie d'une voiture de tourisme avec un agencement de module d'extrémité avant selon l'une des revendications 1 à 5.

7. Carrosserie selon la revendication 6,
**caractérisée en ce que**
l'élément de poutre (32), en particulier la semelle supérieure, est raccordé à des montants A (56) correspondants sur des extrémités (42) arrière respectives.
